(19) Europäisches Patentamt
European Patent Office
Office européen des brevets

(11) Publication number: **0 227 430 B1**

(12) # EUROPEAN PATENT SPECIFICATION

(45) Date of publication of patent specification: **24.07.91**

(51) Int. Cl.5: **B27K 3/44**, B01F 3/08

(21) Application number: **86309869.5**

(22) Date of filing: **17.12.86**

(54) **Preservative compositions.**

(30) Priority: **17.12.85 AU 3902/85**
**21.01.86 AU 4292/86**

(43) Date of publication of application:
**01.07.87 Bulletin 87/27**

(45) Publication of the grant of the patent:
**24.07.91 Bulletin 91/30**

(84) Designated Contracting States:
**AT BE CH DE ES FR GB GR IT LI LU NL SE**

(56) References cited:
WO-A-85/00040
AU-A- 514 897
GB-A- 1 099 283
US-A- 4 155 657
AT-A- 376 145
GB-A- 421 519
GB-A- 2 084 038

(73) Proprietor: **KOPPERS AUSTRALIA PTY. LIMITED**
**Goldfields House 1 Alfred Street**
**Sydney, NSW 2000(AU)**

Proprietor: **THE COMMONWEALTH SCIENTIFIC AND INDUSTRIAL RESEARCH ORGANISATION**
**Limestone Avenue**
**Campbell, Australian Capital Territory 2601(AU)**

(72) Inventor: **Watkins, John Bernard**
**14 Haig Street**
**Belmont New South Wales 2280(AU)**
Inventor: **Chin, Chen Woo**
**26 Rembrandt Drive**
**Wheelers Hill Victoria 3150(AU)**
Inventor: **Greaves, Harry**
**15 Alonso Street**
**Burwood Victoria 3125(AU)**

(74) Representative: **Cropp, John Anthony David et al**
**MATHYS & SQUIRE 10 Fleet Street**
**London, EC4Y 1AY(GB)**

EP 0 227 430 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention concerns stable emulsions particularly useful for preserving timber and for the treatment of other substrates, and to methods of preparing these emulsions. More particularly, the present invention concerns stable emulsions of oil and water, where the oil may be a petroleum oil, or high temperature creosote, for example.

The method of manufacturing these stable emulsions involves emulsifying the components under conditions of ultra high shear simultaneously with the bringing together of the prepared water and oil phases. This method can be conducted in an emulsifying apparatus of the Ultra-Turrax or Dispax-Reactor type having a specially modified inlet, so that the prepared oil and water phases are separately and simultaneously introduced into the dispersing chamber of the high speed emulsifier.

Compositions to protect wood and other substrates are well known in the art. One composition for preserving wood in use for over the last 300 years is creosote, as evidenced by an English Patent No. 214 which was issued to Becker and Serle in 1681. Creosote has mainly been used to preserve wood and fabric, but is also utilised in the fields of medicine, pharmacy, dyes, chemicals, carbon blacks and fuels. However, there are problems in the use of creosote; primarily with handling the substance itself, and handling articles which have been coated or treated with it, particularly due to its odour, and skin irritation caused by coming in contact with it.

In addition, other oils such as petroleum oil and vegetable oil, sometimes mixed with one or more biologically active ingredient, have been used in preserving wood and related substances.

The disadvantages in using oils such as creosote and mineral oil for preserving timber and other substances in recent times are those of heating costs in plant use, flammability, odour, pollution, and unacceptable oily, tarry or "crud" deposits coated on the surface of the treated substrate. These disadvantages limit the use of oils, and creosote in particular, to the treatment of timber which is unlikely to come into contact with people or livestock.

There is therefore a need to provide a preservative composition comprising oils such as creosote which overcomes or at least ameliorates these problems.

The present invention is directed to stable emulsions containing creosote or other oils to preserve lignocellulosic and other substrates in a variety of formulations and treatments and minimising the disadvantages of prior known preservative compositions leaving a black, easily removed, surface deposit, not fully drying, bleeding, staining, irritating skin, producing an unpleasant odour, having excessive flammability, and causing pollution, as well as the high energy costs involved. The potential benefits inherent in a cleaner creosote or other oil based preservative for timber and other substances are far reaching and extremely diverse.

The past use of high temperature creosote (HTC) treated products has led to complaints in Australia since the introduction of HTC In 1969. It was found that treated poles bled profusely in hot weather and developed tenacious, greasy or tarry glossy surfaces, termed "crud". The HTC caused skin sensitisation, irritation and burning on many people handling the treated timber. Similar experiences have been found in other countries with creosote treated products. Despite extensive work in various parts of the world to understand how these problems come about, until recently there have been few advances in producing a commercially acceptable improved oil or creosote based preservative composition.

Australian Patent 514897 to Koppers Australia Pty Ltd. filed on 6 September 1976 discloses oil-in-water emulsions of creosote containing pre-dispersed micronised pigments, the emulsions being produced under conditions of ultra high shear. While the compositions disclosed in this patent are very useful in many situations, problems were found during their use in connection with their stability.

Other wood preservative compositions including creosote, having improved stability over those described in Patent 514897, are disclosed in International Patent Application PCT/AU84/00103 to Koppers Australia Pty Ltd and CSIRO, filed on 13, June 1984 having International Publication No. WO85/00040. This specification particularly concerns pigment emulsified creosote (PEC) compositions which are particularly stable emulsions of creosote and water, together with micronised pigments, rheology structuring agents, wood derived resin alkali metal salts, surfactants, lignin sulfonate and a pigment modifying resin. These emulsions are also produced under conditions of ultra high shear.

The present invention concerns stable emulsions produced under conditions of ultra high shear and containing oils such as creosote or petroleum or mineral oil, for example, and water, together with other ingredients, which exhibit special qualities. The emulsions may be cationic, non-ionic, and/or amphoteric in nature. These qualities confer unique drying characteristics to timber, or other substrates treated with the composition. The means of treatment may be by soaking, dipping, brushing, spraying, or pressure impregnation. The pressure impregnation can be carried out under various conditions including Ruping,

Lowry or Bethell schedule treatments. The emulsions of the present invention have very good stability in storage and in use, even under hostile conditions of pH, temperature, pressure, shear, flow, vacuum and contamination. The emulsions of the invention can be used on a variety of substrates in addition to wood, and result in rapid and permanent surface drying, without bleeding or the formation of undesirable surface deposits or crud. These emulsions exhibit reduced vapour pressure and odour. The odour dissipates rapidly upon drying of the treated articles and as well there is substantial fixation of the components within the treated substrate.

The composition can be used to treat such materials as wood, wood fibre, composite wood products, masonry, iron or steel and so on.

According to the present invention, there is provided a stable emulsion of water and at least one oil, produced by simultaneously bringing together and emulsifying said water and said oil under conditions of ultra high shear, wherein said emulsion contains a water phase comprising an acid and at least one emulsifying agent which emulsifies said emulsion, characterised in that said water phase contains up to 10% by weight based on the water phase of at least one emulsifier selected from cationic and amphoteric emulsifiers and sufficient acid to provide that water phase with pH within the range of 2 to 6.

Preferably the emulsion also contains at least one cation tolerant rheology structuring agent, and

preferably the water phase contains a highly acidic, metal cation rich, polar, complex which is also an oxidising agent.

The emulsion may also contain at least the hydrophobic agent and/or structuring agent introduced mixed and reacted with the oil. In addition, the composition may include one or more of pigments, fillers, extenders or bridging agents.

The invention also provides a process for the manufacture of a stable emulsion of water and at least one oil, said process comprising the steps of:

(a) preparing the aqueous phase by adding and dissolving at least one emulsifying agent in water, together with sufficient acid to provide the water phase with a pH in the range of 2 to 6;

(b) preparing an oil phase comprising at least one oil in which may be dissolved one or more co-surfactants; and

(c) simultaneously bringing together and emulsifying said aqueous phase and said oil phase under conditions of ultra high shear to produce a stable emulsion.

If desired, the process may include the following additional steps:

at least one cation tolerant rheology structuring agent is dissolved in the water to be used in step (a) and the resulting solution allowed to solvate for at least 24 hours with continuous gentle agitation to avoid aeration before step (a), and/or

at least one bridging agent is added to the solution resulting from the addition of the emulsifying agent, and/or

one or more pigments, fillers and extenders are added and dispersed either individually or in combination in the solution formed by the addition of the emulsifying agent, and/or

at least one hydrophobic and/or rheology structuring agent is added to the oil based phase and reacted under high shear for at least 4 hours, and/or

one or more of pigments, fillers and extenders are added to and dispersed in the oil based phase either individually or in combination after the introduction of an hydrophobic and/or rheology structuring agent.

The emulsion of the invention may be produced using an apparatus for ultra high shear emulsification of hydrophobic and hydrophilic phases, of the "Dispax-Reactor" or "Ultra-Turrax" type, the inlet of the apparatus being modified so as to allow the hydrophobic and hydrophilic phases the minimum possible residence time in contact with one another prior to said emulsification; the modification comprising means for separately and substantially simultaneously introducing said phases into the emulsification chamber.

The preferred means for separately and substantially simultaneously introducing the phases into the emulsification chamber is to locate the inlet lines for the two separate phases immediately adjacent to the inlet to the "Dispax-Reactor" or "Ultra-Turrax" emulsification chamber. When each phase is fed at controlled rates into the chamber, they will first come in contact with each other in the chamber.

The flow rate of each phase is preferably precisely controlled according to the relative amounts in the phases required for the desired product; whether a water-in-oil or oil-in-water emulsion is required. The flow rates may be controlled by using proportional controller valves on each inlet line.

The stable emulsions of the invention are highly effective in treating and preserving wood, masonry such as reinforced concrete, steel and similar materials. Micronized pigments may or may not be included in the emulsions as a means of enhancing substantial fixing of the chemical and/or biologically active ingredients in or on the treated article. The pigments may also include fillers or extenders or additional colouring agents.

The emulsions include at least one oil. The oil may be creosote which contains a complex mixture of organic compounds and which is obtained from wood, coal, coal tars or petroleum feed stock. The oil may also be a petroleum oil, a petroleum oil fraction, or blends thereof. Vegetable oil may also be used if desired. If creosote is used, high temperature creosote (HTC) is preferred. The preferred amount of oil in the stable emulsion is from 5 to 95 weight percent. Mixtures of oils can be used, such as a mixture of creosote with a petroleum oil fraction, and/or a vegetable oil.

The stable emulsion also includes a water phase. Preferably from 5 to 95% by weight of the emulsion may be water.

The stable emulsion of the invention also includes a cationic and/or amphoteric emulsifying agent and may additionally include non-ionic emulsifying agents. The term "emulsifying agent" relates to those surfactants and emulsifiers which assist in dispersing a hydrophobic and hydrophilic mixture of substances without the chemically antagonistic reaction which would normally occur when such substances are mixed. Such emulsifying agents may be based upon the ethoxylated amines or fatty amines. These are most preferably ethoxylated diamines of the type:

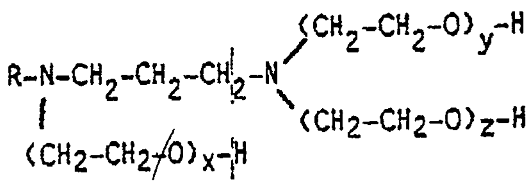

or fatty amines of the formula $R-[NH-(CH_2)_3]_n-NH_2$ where $n = 0$ to 5. The total of substituents x, y and z may be between 3 and 100, preferably between 3 and 43 and most preferably may be 3 or 12. Substituent R is preferably tallow. The preferred ethoxylated diamines of the type described above exhibit good surfactant properties and are stable towards heat and compatible both with cations and anions. This is particularly useful where cationic toxicants and/or fire retardants are included in the emulsions. Other cationic, non-ionic and/or amphoteric emulsifiers are alkyl quaternary ammonium chlorides, imidazoline based compounds, and N-alkyl-amino-propionic acids. Preferred emulsifiers are those sold under the trade names "Dinoramox" (ethoxylated diamine) or "Stabiram" (fatty amine). Both are manufactured by CECA, Prochinor Division, France. The cationic and/or amphoteric emulsifiers should be included in the emulsion in an amount from a trace up to 10% by weight.

The emulsion of the invention may also include at least one cation tolerant rheology structuring agent. The cation tolerant rheology structuring agents are hydrophilic substances which thicken, suspend and stabilise water based systems. Such agents in solution can prevent fine solid particles from settling, or oil drops from rising and assist in bridging the density gap between the water phase and the oil phase.

A preferred rheology structuring agent is "Polyox" which is a high molecular weight, water soluble polymer of ethylene oxide, of the type:

$-(O-CH_2-CH_2)_n^-$

where n is from about 2,000 to about 100,000. Polyox is stable in acid solutions, and its use is preferred in the compositions of the present invention. The structuring agent is preferably present in the composition in an amount from a trace to 2.5% by weight. Another rheology structuring agent which may be used is that sold under the trade mark "Kelzan" by the Kelco Company of the United States, which is a xanthan gum. Swelling clays of the bentonite class such as "Premium Gel" may also be used. Examples of other rheology structuring agents are marketed under the trade names of "Carbopol", which comprise carboxy vinyl polymers, as well as "Cabosil", comprising fumed silicon dioxide.

The emulsion compositions of the present invention are non-ionic amphoteric and/or cationic in nature. The preferred formulations may involve the addition of an organic or inorganic acid to both react with the ethoxylated diamine to render it an emulsifier and to control pH in the final emulsion. Examples of the inorganic acid are phosphoric acid, orthophosphoric acid and hydrochloric acid which are added in an amount necessary to neutralise the ethoxylated diamine according to the number of ethylene oxide molecules condensed on the amine and to control the pH of the emulsion to between 2 and 6. Examples of the organic acid are glacial acetic acid, stearic acid, linoleic acid and oleic acid.

The amount of acid utilized over and above that necessary to neutralize the ethoxylated diamine can be important when a metal oxide or hydroxide or mixture constitutes the pigment incorporated in the emulsion. The amount of acid to achieve the desired pH of the emulsion will be governed by the desired stability of

the final emulsion concomitant with the isolectric point(s) of the pigment system and oil or water droplets embodied in and in regard to behaviour of the emulsion.

The emulsion may also include at least one polar chemical and/or biologically active ingredient. Such a polar active ingredient is a substance which interacts with the structure of the substrate upon which it confers chemical and/or biological protection, or with which it reacts integral to the emulsion chemistry. Preferably such an ingredient is a highly acidic, metal cation rich, polar complex, which is also an oxidising agent. The preferred such substance is a copper-chromium- arsenic paste or liquid sold under such trade names as "Tanalith", "Celcure" and Boliden". Other polar active ingredients are water soluble boron compounds, water soluble fluorine compounds and so on, or these are substituted in the copper-chromium compounds above, for example. The polar active ingredient is preferably present in an amount of a trace to 25% by weight.

The ingredients may also include one or more bridging agents. A bridging agent is a compound which is soluble in both phases, and which reduces the mutual repellent nature of the individual phases comprising the emulsion. The preferred bridging agent is a glycol, most preferably hexylene glycol. If used, the bridging agent should be present in an amount from a trace to 30% by weight.

One or more predispersed micronized pigments may also be included in the composition of the invention. The pigment may be an amphoteric, nonionic or cationic pigment. Pigments includes fillers, extending and colouring agents. A preferred pigment is titanium dioxide. More than one micronized pigment can be used. These pigments may be precoated and activated with one or more cationic or amphoteric surfactants to allow the pigment to be easily dispersed in the aqueous and/or oil phase and to be electrically active. If a precoated pigment is used, it is preferably included in an amount from 0.5 to 7.5 weight percent. Alternatively, the micronized pigments may be predispersed in an amphoteric, nonionic or cationic medium in a concentration of up to 75 weight percent, and this solution incorporated in the composition of the invention so that the pigment comprises from 0.5 to 30 weight percent.

In whatever way the pigment is pretreated or incorporated in the composition, if present it is preferably in an amount from 0.5 to 30 weight percent. More preferably, it is present in an amount less than 25 weight percent. Other pigments incorporated in the specification may be organic pigments or metallic pigments, such as bronze powder or aluminum paste, and various types of fillers such as talc, silicon dioxide and calcites.

When an oil is present which is not creosote, or as a frequently desirable option when creosote is present, extra substances may be present in the emulsion.

One of these substances is a hydrophobic and lipophilic agent which is reacted in the oil phase prior to emulsification. A hydrophobic agent is a compound which chemically activates the organic phase to enhance its water repellency and assist in protecting it from the hostile nature of the water phase. A preferred hydrophobic agent is a long chain aliphatic amine. These amines have the advantage of conferring corrosion resistance on the surfaces of machinery and apparatus used to produce the protective compositions, and onto the surfaces of metal substrates treated with compositions for example. These amines also are bactericides and algicides. The hydrophobic agent chosen should be cation tolerant and a preferred such amine is diamine dioleate of the type:

$$\begin{array}{llll} R_1-NH_2^+ & -CH_2-CH_2-CH_2 & -NH_3^+ \\ \quad R_2COO^- & & \quad R_2COO^- \end{array}$$

In this formula, $R_1$ is a long chain fatty acid preferably tallow or oleyl and $R_2$ is preferably derived from oleic acid, or similar acids. Preferred hydrophobic agents are those sold under the trade names "Inipol 002" or Inipol S02". Both compounds are manufactured by CECA, Prochinor Division, France. The hydrophobic agent is preferably present in the composition in amount from a trace to 10% by weight, and preferably from 0.2 to 1.0% by weight. One or more predispersed micronised pigments may be dispersed into the oil phase. These pigments are preferably included in an amount of from 0.5 to 7.5% by weight.

The compositions of the invention are capable of continuous use under normal and adverse conditions of temperature and pressure and are able to withstand significant contamination by inert materials, opposing ions and chemicals and acid extractives from the timber substrates.

Desirable optional components in the composition of the invention are pre-treated and/or pre-coated micronized pigments or extenders or inert fillers capable of reaction within the emulsion and on or within the structure of the substrate to produce special effects.

Either the oil phase, and/or the water phase, can be modified chemically or fortified by the addition of

water and/or oil soluble toxicants, and/or phase-dispersed insoluble toxicants to provide insecticidal and termiticidal efficacy concomitant with a clean non-polluting and aesthetically pleasing treated substrate. Other ingredients can also be added to the composition to confer the broad spectrum of activities required in the building industry field. Paraffin waxes of various melting point specification from 47° C through 127° C, beeswax (crude or refined), water soluble waxes of various grading and molecular weight may be added to the emulsions of the invention in proportion of up to 10% by weight of final emulsion. These waxes can be added individually or in combination dictated by finished emulsion and its desirable inherent qualities. The waxes can be added in the form of crude petroleum wax. The waxes are added to provide enhanced water-proofing.

Fillers which may be useful in the emulsions of the invention are e.g. Reynolds (USA) sodium aluminate powder, talc, diatomaceous earth, calcite, barytes, and silicates.

Dyes useful in the emulsions of the invention are oil soluble dyes which are used alone or in conjunction with pigments to heighten colour upon ageing, or upon initial application and to protect the finished product by deflecting some specific wavelengths light, inhibit u.v. effects and prevent tar-like exudate formation or inhibit oxidation. Dyes can be used in the compositions of the invention in a sacrificial mode to screen out u.v. and/or i.r. radiation in initial stages of exposure of painted or treated surfaces so that fading occurs to heighten pigment colouration and precludes any tar formation or darkening. Examples of suitable dyes are INTERACETYL RED, INTERACETYL GREY, KCA oil yellow 2G, KCA oil orange E, KCA oil red A, CHROMOFINE orange 2R550, CHROMOFINE red B750, SEIKAFAST yellow M35, CHROMOFINE GREEN 2G550D and CHROMOFINE BLUE 5275.

The metallic pigments have found excellent use in imparting a "metallic" and lustrous finish alone or in conjunction with other colourants. This function of the compositions of the invention not only relies upon penetration of, and preservative value of, the creosote but provides added mechanical protection to surfaces for areas of exposure to severe conditions of environmental hazards such as dust, water, salt, fall-out, salt spray, chemical attack, etc. Suitable metallic pigments are e.g. bronze powders and aluminium pastes. The pastes may be used in amounts of up to 10% alone or in combination with pigments and/or dyes.

Vegetable oils used additionally in the emulsions of the invention are oils derived from natural products and used as emulsion stabilisers, drying aids, extenders and solution aids for specific high resin additions. These oils are used to ensure compatability of some non-aromatic ingredients wherein long storage life is expected. They have been used to change vapour pressure characteristics of finished emulsion which is subsequently used in livestock areas or high density housing and population areas. They are used to assist in forming metal soaps. Some examples of these vegetable oils are tall oil, tallow fatty acids, fatty acid pitch, crude linseed oil, boiled linseed oil, polymerised linseed oil, soya bean oil, rapeseed oil, wood oils, stand oils, castor oil, stearic fatty acids and coconut fatty acids.

These oils may additionally be added in amounts up to 10% of the finished emulsion and for specific purposes up to 25% of the finished emulsion.

Mineral oils may be useful as additives in the emulsions of the invention to reduce the aromatic content of the emulsion or to enable specific formulation and difficult resin additions to be made. Examples of these mineral oils are mineral turpentine, paraffin oil, low aromatic oils, liquid paraffins, modified process oils, diesel fractions (kerosene cuts), process oils. These oils may additionally be added in amounts up to 10% of finished emulsion and to higher percentages for specific extender or solution aid uses.

The emulsions of the invention may be applied to porous substrates, by impregnation at ambient or elevated pressures and at ambient or elevated temperatures. The emulsions may also be applied to surfaces by spraying, brushing or rolling. The viscosity of the emulsion may be adjusted so that the compositions have the consistency of a fluid-paste, wax or gel. When the emulsions are in those forms they may also be applied to surfaces by rubbing, trowelling, pumping and so on.

The invention provides an ultra stable emulsion which can be modified by addition of inert fillers, specialised chemicals and non-flammable organic liquids and complex solutions, colloids and/or other emulsions to impart fire retardancy to the treated timber. Especially significant is the range of fire retardant organic liquids which can be dissolved in and/or emulsified with the creosote to produce a fire retardant preservative with none of the vapour problems associated with some of the organic liquids alone. Some fire retardant chemicals which can be emulsified in the invention do exhibit inherent preservative efficacy and would complement the compositions of the invention.

One method of preparing the composition involves dissolving the cation tolerant rheology agent in water with continuous gentle agitation and allowing the resulting solution to solvate for at least 24 hours. At the end of this period, the cationic and/or amphoteric emulsifier is added to the solution, with continuous agitation and letting it react for a minimum of one hour.

The water phase is agitated continuously during this period. When a bridging agent is used, it is added

to the water phase and ideally allowed to mix for about one hour. If a pigment is required, it is added to the solution so as to avoid foaming. Ideally the mixture is allowed to react for 2 hours prior to the addition of the polar chemical and/or biologically active ingredient. The completed aqueous phase solution should preferably be allowed to age for at least four hours, before being emulsified with the oil based phase.

The oil based phase is prepared separately comprising at least one oil. The oil may be a petroleum oil, or creosote, or a mixture of these, for example. The hydrophobic agent, if included, may be dissolved and reacted in the oil, preferably in hot oil at a temperature of 40 to 50 °C. If a pigment is desired, it is dispersed in the oil phase prior to ageing. The resulting oil based phase should ideally be allowed to age for at least four hours, before emulsification.

The other ingredients may be added to the oil or aqueous phases at this stage, depending on whether they are hydrophobic or hydrophilic. The emulsion is prepared by simultaneously bringing together and emulsifying the aqueous and oil phases under conditions of ultra high shear. The ultra high shear conditions may be produced using a Dispax-reactor or an Ultra-turrax reactor, having an inlet which has been modified so that the two phases are mixed together for an absolute minimum time prior to actual emulsification. This is preferably done by only bringing together the two different phases at the actual time when emulsification occurs, by means of two separate pipes bringing each phase straight into the suction of the reactor inlet.

The ultra high shear may be carried out by any means known in the art for such a purpose.

However, the ultra high shear emulsification is preferably carried out using an apparatus which is generally of the Dispax-Reactor or Ultra-turrax type with modifications to allow the separate and simultaneous introduction of the prepared hydrophilic and hydrophobic phases into the dispersing chamber of the apparatus. The Dispax and Ultra-turrax apparatus are based on the effect of mechanical high-frequency on stator/rotor systems at high peripheral speeds. Their dispersing chambers, where the stable emulsions are produced, generally contain slotted cylinders, the slots arranged parallel to the axis of rotation. The cylinders are closely spaced to the walls of the chambers, and rotate at very high speeds.

The means for introducing the two different phases into the central space of the cylinders may be a jet arrangement, or preferably two separate input conduits meeting at the entrance to the dispersing chamber, or other means.

Various embodiments of the present invention are now described with reference to actual examples which should not be construed as limiting on the present invention.

Examples 1 to 6

The following examples were blended in an Ultra Turrax reactor in accordance with the invention, using a T45 G6 Generator at 1050 rad. $sec^{-1}$ at room temperature (about 20 °C) to produce cationic emulsions as listed in Table 1

A Water
B Polyox WSR205 [Rheology structuring agent]
C Hexylene Glycol [Bridging agent]
D Dinoramox S12 [Emulsifying agent]
E Non-ionic pigment (white) [Pigment]
F High Temperature creosote (AS1143) [Oil]
G Inipol 002 [Hydrophobic agent]

TABLE 1

| Example Number | A | B | C | D | E | F | G | pH * |
|---|---|---|---|---|---|---|---|---|
| | Component (parts by weight) | | | | | | | |
| 1 | 27.5 | 0.25 | 2.5 | 1.0 | 5.0 | 70.0 | 1.0 | 5.8 |
| 2 | 27.5 | 0.25 | 2.5 | 1.0 | 5.0 | 70.0 | 1.0 | 3.9 |
| 3 | 27.5 | 0.25 | 2.5 | 1.0 | 5.0 | 70.0 | 1.0 | 2.0 |
| 4 | 47.5 | 0.5 | 2.5 | 1.0 | 5.0 | 50.0 | 1.0 | 6.0 |
| 5 | 47.5 | 0.5 | 2.5 | 1.0 | 5.0 | 50.0 | 1.0 | 3.8 |
| 6 | 47.5 | 0.5 | 2.5 | 1.0 | 5.0 | 50.0 | 1.0 | 1.9 |

* Using phosphoric acid as a polar chemically active ingredient and to adjust the pH.

The formulations produced in Examples 1-6 were subjected to seven cycles of freezing at -18° C for 16 hours followed by thawing for 8 hours. The emulsions remained stable visually. Prior to freeze/thaw a quantity of emulsion was removed from Examples 1-6. Those samples were heated up to 100° C for seven days then cooled to ambient temperature. The emulsions remained stable visually.

Examples 7 to 30

The following examples were blended in an Ultra Turrax using a T45G6 Generator at 1050 rad. $sec^{-1}$ at room temperature (about 20° C) to produce "white" cationic emulsions as listed in Table 2.

A Water
B Polyox WSR205 [Rheology structuring agent]
C Stabiram MS3 [Emulsifying agent]
D Non-ionic pigment (white) [Pigment]
E High Temperature creosote (AS1143) [Oil]
F Inipol 002 [Hydrophobic agent]
G Calcium Chloride

TABLE 2

| Example Number | A | B | C | D | E | F | G | pH * |
|---|---|---|---|---|---|---|---|---|
| | Component (parts by weight) | | | | | | | |
| 7 | 50.0 | 0.5 | 1.0 | 5.0 | 50.0 | 0.5 | 0.4 | 6.0 |
| 8 | 50.0 | 0.5 | 1.0 | 5.0 | 50.0 | 0.5 | - | 6.0 |
| 9 | 50.0 | 0.5 | 1.0 | 5.0 | 50.0 | 0.5 | 0.4 | 4.0 |
| 10 | 50.0 | 0.5 | 1.0 | 5.0 | 50.0 | 0.5 | - | 4.0 |
| 11 | 50.0 | 0.5 | 1.0 | 5.0 | 50.0 | 0.5 | 0.4 | 2.0 |
| 12 | 50.0 | 0.5 | 1.0 | 5.0 | 50.0 | 0.5 | - | 2.0 |
| 13 | 50.0 | 0.5 | 1.0 | 5.0 | 50.0 | - | 0.4 | 6.0 |
| 14 | 50.0 | 0.5 | 1.0 | 5.0 | 50.0 | - | - | 6.0 |
| 15 | 50.0 | 0.5 | 1.0 | 5.0 | 50.0 | - | 0.4 | 4.0 |
| 16 | 50.0 | 0.5 | 1.0 | 5.0 | 50.0 | - | - | 4.0 |
| 17 | 50.0 | 0.5 | 1.0 | 5.0 | 50.0 | - | 0.4 | 2.0 |
| 18 | 50.0 | 0.5 | 1.0 | 5.0 | 50.0 | - | - | 2.0 |
| 19 | 30.0 | 0.25 | 1.6 | 5.0 | 70.0 | 0.5 | 0.4 | 5.5 |
| 20 | 30.0 | 0.25 | 1.6 | 5.0 | 70.0 | 0.5 | - | 5.5 |
| 21 | 30.0 | 0.25 | 1.6 | 5.0 | 70.0 | 0.5 | 0.4 | 4.0 |
| 22 | 30.0 | 0.25 | 1.6 | 5.0 | 70.0 | 0.5 | - | 4.0 |
| 23 | 30.0 | 0.25 | 1.6 | 5.0 | 70.0 | 0.5 | 0.4 | 2.4 |
| 24 | 30.0 | 0.25 | 1.6 | 5.0 | 70.0 | 0.5 | - | 2.4 |
| 25 | 30.0 | 0.25 | 1.5 | 5.0 | 70.0 | - | 0.4 | 6.0 |
| 26 | 30.0 | 0.25 | 1.5 | 5.0 | 70.0 | - | - | 6.0 |
| 27 | 30.0 | 0.25 | 1.5 | 5.0 | 70.0 | - | 0.4 | 4.0 |
| 28 | 30.0 | 0.25 | 1.5 | 5.0 | 70.0 | - | - | 4.0 |
| 29 | 30.0 | 0.25 | 1.5 | 5.0 | 70.0 | - | 0.4 | 2.5 |
| 30 | 30.0 | 0.25 | 1.5 | 5.0 | 70.0 | - | - | 2.5 |

* Using phosphoric acid as a polar chemically active ingredient and to adjust pH

Examples 31 to 43

The following examples were blended in an Ultra Turrax using a T45G6 Generator at 1050 rad. $sec^{-1}$ at room temperature (about 20 °C) to produce "white" cationic emulsions as listed in Table 3:

A Water
B Polyox WSR205 [Rheology structuring agent]
C Hexylene Glycol [Bridging agent]
D Dinoramox S12 [Emulsifying agent]
E Copper-Chromium-Arsenic paste (Tanalith CP) [Polar chemically and biologically active ingredient]
F High Temperature Creosote [Oil]
G Inipol 002 [Hydrophobic agent]
H Cationic Pigment (white) [Pigment]
I Non-ionic pigment (white) [Pigment]
J Cabosil [Rheology structuring agent]

TABLE 3

| Example Number | Component (parts by weight) A | B | C | D | E | F | G | H | I | J |
|---|---|---|---|---|---|---|---|---|---|---|
| 31 | 78.0 | 1.0 | 2.0 | 1.0 | 8.1 | 20.0 | 1.0 | 2.0 | -- | 1.0 |
| 32 | 78.0 | 1.0 | 2.0 | 1.0 | 8.1 | 20.0 | 1.0 | 2.0 | -- | 0.5 |
| 33 | 78.0 | 1.0 | 2.0 | 1.0 | 8.1 | 20.0 | 1.0 | 2.0 | -- | -- |
| 34 | 78.0 | 1.0 | 2.0 | 1.0 | 13.0 | 20.0 | 1.0 | 2.0 | -- | 1.0 |
| 35 | 78.0 | 1.0 | 2.0 | 1.0 | 13.0 | 20.0 | 1.0 | 2.0 | -- | 0.5 |
| 36 | 78.0 | 1.0 | 2.0 | 1.0 | 13.0 | 20.0 | 1.0 | 2.0 | -- | -- |
| 37 | 78.0 | 1.0 | 2.0 | 1.0 | 8.1 | 20.0 | 1.0 | -- | 2.0 | 1.3 |
| 38 | 78.0 | 1.0 | 2.0 | 1.0 | 8.1 | 20.0 | 1.0 | -- | 2.0 | -- |
| 39 | 68.2 | 0.9 | 1.8 | 0.9 | 7.1 | 30.0 | 1.5 | -- | 1.8 | 1.3 |
| 40 | 68.2 | 0.9 | 1.8 | 0.9 | 7.1 | 30.0 | 1.5 | -- | 1.8 | -- |
| 41 | 58.5 | 0.8 | 1.5 | 0.8 | 6.1 | 40.0 | 2.0 | -- | 1.5 | 1.3 |
| 42 | 58.5 | 0.8 | 1.5 | 0.8 | 6.1 | 40.0 | 2.0 | -- | 1.5 | -- |
| 43 | 48.8 | 0.6 | 1.2 | 0.6 | 5.1 | 50.0 | 2.5 | -- | 1.3 | -- |

Example 44

A 500kg batch of emulsion with the following components (parts by weight) was manufactured in an emulsifying pilot plant using a modified Dispax Reactor in accordance with the invention.

| | Component | Parts | Amount (kg) |
|---|---|---|---|
| A | Water | 27.5 | 137.5 |
| B | Polyox WSR205 [Rheology structuring agent] | 0.25 | 1.25 |
| C | Heylene Glycol [Bridging agent] | 2.5 | 12.5 |
| D | Dinoramox S12 [Emulsifying agent] | 1.0 | 5.0 |
| E | Nonionic Pigment (White) [Pigment] | 5.0 | 25.0 |
| F | High Temperature Creosote [Oil] | 70.0 | 350.0 |
| G | Inipol 002 [Hydrophobic agent] | 1.0 | 5.0 |
| H | Orthophosphoric acid [Polar chemically active ingredient] | 1.0 | 5.0 |

This emulsion at an initial pH of 3.2 was used to treat hardwood pole stubs and sawn timber. Twenty treatment charges were carried out and the emulsion was heated to temperatures of up to 73°C and hydraulic pressures of up to 1400kPa were used. The pH, surface tension, specific gravity, moisture content and pigment content of the emulsion used in each charge was analysed. After 20 charges, despite slight increases in the pH and pigment values, the emulsion was still stable based on detailed analyses, macroscopic and microscopic observations.

The surface of all the treated samples dried within a few weeks in spite of the wintry conditions.

Example 45

A 300kg batch of emulsion of the following compositions was manufactured using the pilot emulsion plant.

| | Component | Parts | Amount (kg) |
|---|---|---|---|
| A | Water | 63.4 | 190.0 |
| B | Polyox WSR205 [Rheology structuring agent] | 0.8 | 2.5 |
| C | Hexylene Glycol [Briding agent] | 1.6 | 5.0 |
| D | Dinoramox S12 [Emulsifying agent] | 0.8 | 2.5 |
| E | Non-ionic Pigment (White) [Pigment] | 5.0 | 15.0 |
| F | Copper-Chromium-Arsenic Paste [Polar chemically and biologically active ingredient] | 6.6 | 20.0 |
| G | High Temperature Creosote [Oil] | 35.0 | 105.0 |
| H | Inipol 002 [Hydrophobic agent] | 1.8 | 5.3 |
| I | Orthophosphoric acid [Polar chemically active ingredient] | 0.05 | 0.15 |

The final pH of the completed emulsion was 4.2. Five treatment charges of hardwood pole stubs were treated with this completed emulsion. At the end of this, the emulsion was still stable, according to analytical

and microscopical results.

Example 46

The following were blended in an Ultra-Turrax reactor in accordance with the present invention using T45 G6 generator at 1050 rad.sec at ambient temperature (20° C).

| | | Parts by Weight |
|---|---|---|
| A | Distilled Water | 50.0 |
| B | Polyox WSR205 [Rheology structuring agent] | 0.5 |
| C | Dinoramox S12 [Emulsifying agent] | 1.0 |
| D | Orthophosphoric acid [Polar chemically active ingredient] | 0.5 |
| E | High Temperature Creosote [Oil] | 50.0 |
| F | Non Ionic Pigment (white)[Pigment] | 3.0 |

Example 47

The following were blended in a Ultra Turrax (as in Example 46)

| | | Parts by Weight |
|---|---|---|
| A | Distilled Water | 45.0 |
| B | Polyox WSR205 [Rheology structuring agent] | 0.25 |
| C | Dinoramox S12 [Emulsifying Agent] | 1.0 |
| D | Orthophosphoric acid [Polar chemically active ingredient] | 0.5 |
| E | Hexylene Glycol [Bridging Agent] | 5.0 |
| F | High Temperature Creosote [Oil] | 50.0 |
| G | Inipol 002 [Hydrophobic agent] | 0.5 |

Example 48

The following were blended in an Ultra Turrax (as in Example (46)

| | | Parts by Weight |
|---|---|---|
| A | Distilled Water | 63.5 |
| B | Polyox WSR205 [Rheology structuring agent] | 0.5 |
| C | Dinoramox S12 [Emulsifying agent] | 0.8 |
| D | Hexylene Glycol [Bridging agent] | 1.5 |
| E | Non-ionic Pigment (white) [Pigment] | 5.0 |
| F | Copper-chromium-arsenic paste [Polar chemically & biologically active ingredient] | 6.5 |
| G | Industrial Fuel Oil [Heavy residue from petroleum crude refinery] | 35.0 |

Example 49

The following were blended in an Ultra Turrax (as in Example (46)

| | Component | Parts by Weight | Amount (kg) |
|---|---|---|---|
| A | Water | 65.0 | 325.0 |
| B | Dinoramox S12 [Emulsifying Agent] | 1.0 | 5.0 |
| C | Tanalith [Polar chemically active ingredient] | 10.7 | 51.0 |
| D | Oil (Protea 15 Oil) | 35.0 | 175.0 |
| E | Dinoramox S 43 [Emulsifying Agent] | 0.5 | 2.5 |

Other aspects of the present invention are described with reference to the drawings where:

Figure 1 shows a sectional view of a modified Dispax-Reactor apparatus for ultra high shear emulsification to produce the stable emulsion of the invention.

Figure 2 shows a more complete view of the apparatus of Figure 1 for ultra high shear emulsification to produce the stable emulsion of the invention, and showing how flow rates of the two phases are adjusted and controlled.

With reference to Figure 1, which shows a partial sectional view of a modified Dispax-Reactor in accordance with the present invention, a reactor 1 is shown having an emulsifying or dispersing chamber 2. The dispersing chamber 2 contains stators 3 and rotors 4. There is a heating or cooling jacket 5 having inlet and outlet ports 6 surrounding the chamber. There is an outlet 7 for the stable emulsions produced by the apparatus 1, in accordance with the invention. The apparatus 1 has an inlet 8 for the hydrophobic phase and an inlet 9 for the hydrophilic phase, the phases mixing and forming the stable emulsion in the dispersing chamber 2. The residence time of the hydrophobic and hydrophilic phases, once mixed, is kept to a minimum prior to entering the dispersing chamber. In the chamber 2 the two phases are mechanically sheared by the rotor 4/stator 3 arrangement inside the chamber 2. The rotor 4 rotates up to 8,000 rpm and the circumferential speed of the rotor/stator system is up to 23 m/sec. The two phases entering the chamber 2 via inlet conduit 8 and conduit 9 are pumped so that the mixture is forced to pass through the three rotor/stator generators in series, (from coarse to fine), to produce the stable emulsion of the invention.

Figure 2 shows a more complete version of the Dispax-Reactor of Figure 1. The features of the modified Dispax-Reactor in Figure 2 are numbered the same as in Figure 1.

However, the apparatus also shows the electric motor 10 which powers the stator/rotor assembly. In

addition, in order to manufacture an emulsion of the desired composition, namely a water-in-oil or oil-in-water emulsion, there needs to be precise control of the hydrophobic and hydrophilic phase flow rates. Figure 2 shows how the flow rates may be adjusted using control valves 11 connected to a proportional controller 12, which is used to govern the actual flow rate. Non-return valves 13 are preferably installed in the input conduits 8 and 9 to prevent backflow and mixing of one phase with the other.

The two phases are pumped simultaneously through the generator chamber at high speeds so that each of the oil and water phases is mixed together for the minimum amount of time prior to emulsification. In the normal, unmodified Dispax-Reactor, the two phases are not kept separate prior to emulsification, but are allowed to intermingle for some relatively long period of time. The normal Dispax-Reactor does not produce as stable an emulsion as the apparatus as herein described.

## Claims

1. A stable emulsion of water and at least one oil, produced by simultaneously bringing together and emulsifying said water and said oil under conditions of ultra high shear, wherein said emulsion contains a water phase comprising an acid and at least one emulsifying agent which emulsifies said emulsion, characterised in that said water phase contains up to 10% by weight based on the water phase of at least one emulsifier selected from cationic and amphoteric emulsifiers and sufficient acid to provide that water phase with pH within the range of 2 to 6.

2. An emulsion according to claim 1 in which the water phase contains a highly acidic, metal cation rich, polar complex, which is also an oxidising agent.

3. An emulsion according to claim 1 or claim 2 wherein said at least one oil is selected from creosote, vegetable oil, petroleum oils and petroleum oil fractions.

4. An emulsion according to claim 3 wherein the creosote is a high temperature creosote.

5. An emulsion according to any one of claims 1 to 4 wherein said at least one emulsifier is chosen from one or more alkyl quaternary ammonium chlorides, imidazoline based compounds, N-alkyl-amino-propionic acids and ethoxylated amines.

6. An emulsion according to claim 5 wherein the ethoxylated amine comprises (a) diamines of the type:

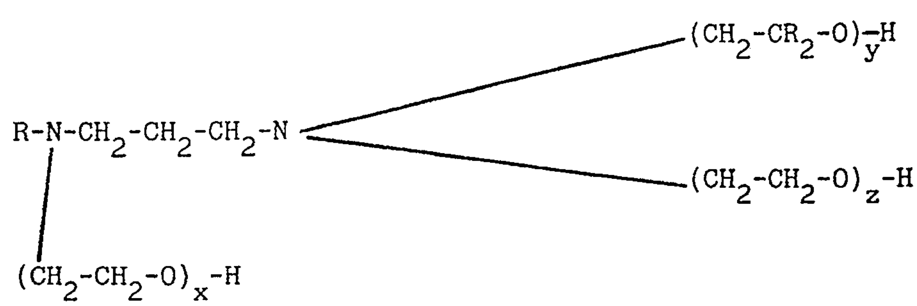

wherein the total of the substituents x, y and z is between 3 and 100 and wherein R is an alkyl derivative of fatty acid with chain length $C_8$-$C_{20}$ and/or fatty amines of the type $R-[NH-(CH_2)_3]_n-NH_2$ wherein n = 0 to 5 and R is an alkyl derivative of a fatty acid.

7. An emulsion according to claim 6 wherein the total of the substituents x, y and z is between 3 and 43 and preferably between 3 and 12.

8. An emulsion according to any one of the claims 1 to 7 further containing one or more additives selected from at least one of any of the following additives: cation tolerant rheology structuring agents, waxes, dyes, pigments, micronised pigments, fillers, extenders, bridging agents, polar chemical and/or biologically active ingredients, and hydrophobic and/or structuring agents, wherein said hydrophobic and/or structuring agents are introduced, mixed and reacted within either the oil or aqueous phase, corrosion inhibiting chemicals, and flame retarding chemicals.

9. An emulsion according to claim 8 wherein the rheology structuring agent is selected from water soluble polymers of ethylene oxide, xanthan gums, swelling clays, carboxyl vinyl polymers and fumed silicon dioxide, and/or the pigment is titanium dioxide and/or iron oxides, and/or the bridging agent is a glycol, and/or the hydrophobic and/or structuring agent is a diamine dioleate.

10. An emulsion according to claim 8 or 9 wherein the pigment is precoated and activated with one or more cationic or amphoteric surfactants.

11. An emulsion according to claim 8 wherein the micronised pigment is predispersed in an amphoteric, non-ionic or cationic medium in a concentration of up to 75 weight percent of the predispersion medium.

12. A stable emulsion according to claim 1 comprising 5-95% water and 5-95% of at least one oil, produced by simultaneously bringing together and emulsifying said water and said oil under conditions of ultra high shear, wherein said water phase comprises up to 25% of a highly acidic, metal cation rich, polar complex which is also an oxidising agent, said emulsion further comprising up to 2.5% of a rheology structuring agent, up to 30% of a bridging agent and up to 50% of a pigment, wherein all percentages are percent by weight of the total weight of the emulsion.

13. A process for the manufacture of a stable emulsion of water and at least one oil, as claimed in any one of claims 1 to 12 comprising
(a) preparing the aqueous phase by adding and dissolving at least one emulsifying agent in water together with sufficient acid to provide the water phase with pH in the range of 2 to 6,
(b) preparing an oil phase comprising at least one oil in which may be dissolved one or more co-surfactants; and
(c) simultaneously bringing together and emulsifying said aqueous phase and said oil phase under conditions of ultra high shear to produce a stable emulsion.

14. A process according to claim 13 wherein at least one cation tolerant rheology structuring agent is dissolved in the water to be used in step (a) and the resulting solution allowed to solvate for at least 24 hours with continuous gentle agitation to avoid aeration before step (a), and/or

at least one bridging agent is added to the solution resulting from the addition of the emulsifying agent and/or

one or more pigments, fillers and extenders are added and dispersed either individually or in combination in the solution formed by the addition of the emulsifying agent and/or

at least one hydrophobic and/or rheology structuring agent is added to the oil based phase and reacted under high shear for at least 4 hours, and/or

one or more of pigments, fillers and extenders are added to and dispersed in the oil based phase either individually or in combination after the introduction of an hydrophobic and/or rheology structuring agent.

15. A method for preserving cellulosic substances against deterioration comprising applying the emulsion according to any one of claims 1 to 12 to said cellulosic substances.

16. A method according to claim 15 wherein the application is by vacuum pressure impregnation, spraying or brushing.

17. A method of applying toxicants to a cellulosic substance wherein an emulsion as defined in any one of claims 1 to 12 is modified by the addition of water and/or oil soluble toxicants, and/or phase-dispersed insoluble toxicants.

## Revendications

1. Emulsion stable composée d'eau et d'au moins une huile, préparée en ce qu'on combine et émulsionne simultanément ladite eau et ladite huile dans des conditions de cisaillement très poussé,

ladite émulsion contenant une phase aqueuse comprenant un acide et au moins un agent émulsifiant qui émulsionne ladite émulsion, caractérisée en ce que ladite phase aqueuse contient jusqu'à 10 % en poids, par rapport à la phase aqueuse, d'au moins un émulsifiant choisi parmi des émulsifiants cationiques et amphotères, et suffisamment d'acide pour donner à cette eau un pH compris dans la plage de 2 à 6.

**2.** Emulsion selon la revendication 1, dans laquelle la phase aqueuse contient un complexe polaire, fortement acide et riche en cations métalliques, qui est aussi un agent d'oxydation.

**3.** Emulsion selon la revendication 1 ou 2, dans laquelle ladite au moins une huile est choisie parmi la créosote, une huile végétale, des huiles de pétrole et des fractions d'huiles de pétrole.

**4.** Emulsion selon la revendication 3, dans laquelle la créosote est une créosote résistante aux températures élevées.

**5.** Emulsion selon l'une quelconque des revendications 1 à 4, dans laquelle ledit au moins un émulsifiant est choisi parmi un ou plusieurs chlorures d'alkyl-ammonium quaternaire, des composés à base d'imidazoline, des acides N-alkylaminopropioniques et des amines éthoxylées.

**6.** Emulsion selon la revendication 5, dans laquelle l'amine éthoxylée comprend (a) des diamines du type :

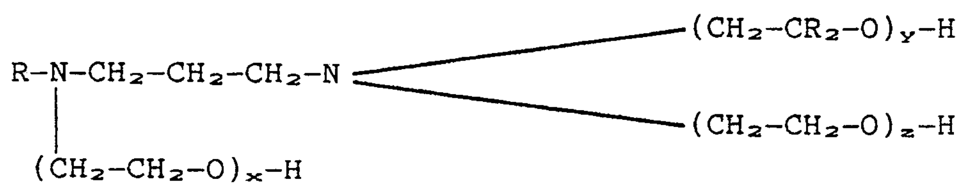

où le total des substituants x, y et z est compris entre 3 et 100, et où R représente un dérivé d'alkyle d'un acide gras d'une longueur de chaîne $C_8$-$C_{20}$ et/ou des amines grasses du type R-[NH-$(CH_2)_3$]$_n$-$NH_2$ où n vaut de 0 à 5 et R représente un dérivé d'alkyle d'un acide gras.

**7.** Emulsion selon la revendication 6, dans laquelle le total des substituants x, y et z est compris entre 3 et 43 et, de préférence, entre 3 et 12.

**8.** Emulsion selon l'une quelconque des revendications 1 à 7, contenant en outre un ou plusieurs additifs choisi(s) parmi au moins un de n'importe lequel des additifs suivants : agents de structuration rhéologique tolérants aux cations, cires, colorants, pigments, pigments micronisés, charges, agents d'allongement, agents de pontage, ingrédients chimiques polaires et/ou biologiquement actifs, et agents hydrophobes et/ou de structuration, dans laquelle lesdits agents hydrophobes et/ou de structuration sont introduits, mélangés et mis en réaction à l'intérieur soit de la phase huileuse, soit de la phase aqueuse, de produits chimiques inhibant la corrosion et de produits chimiques ignifuges.

**9.** Emulsion selon la revendication 8, dans laquelle l'agent de structuration rhéologique est choisi parmi des polymères hydrosolubles d'oxyde d'éthylène, des gommes de xanthane, des argiles gonflantes, des polymères carboxyvinyliques et un dioxyde de silicium fumé, et/ou le pigment est du blanc de titane et/ou des oxydes de fer, et/ou l'agent de pontage est un glycol, et/ou l'agent hydrophobe et/ou de structuration est un dioléate de diamine.

**10.** Emulsion selon la revendication 8 ou 9, dans laquelle le pigment est pré-enduit et activé avec un ou plusieurs agents tensio-actifs cationiques ou amphotères.

**11.** Emulsion selon la revendication 8, dans laquelle le pigment micronisé est préalablement dispersé dans un milieu amphotère, non ionique ou cationique, à une concentration allant jusqu'à 75 % en poids, par rapport au milieu de prédispersion.

12. Emulsion stable selon la revendication 1, comprenant 5 à 95 % d'eau et 5 à 95 % d'au moins une huile, préparée en ce qu'on combine et émulsionne simultanément ladite eau et ladite huile dans des conditions de cisaillement très poussé, dans laquelle ladite phase aqueuse comprend jusqu'à 25 % d'un complexe polaire fortement acide et riche en cations métalliques, qui est aussi un agent d'oxydation, ladite émulsion comprenant en outre jusqu'à 2,5 % d'un agent de structuration rhéologique, jusqu'à 30 % d'un agent de pontage et jusqu'à 50 % d'un pigment, dans laquelle tous les pourcentages sont des pourcentages en poids, par rapport au poids total de l'émulsion.

13. Procédé de préparation d'une émulsion stable composée d'eau et d'au moins une huile selon l'une quelconque des revendications 1 à 12, comprenant les étapes consistant à :
(a) préparer la phase aqueuse en ajoutant et dissolvant au moins un agent émulsifiant dans l'eau, en même temps que suffisamment d'acide pour donner à la phase aqueuse un pH compris dans la plage de 2 à 6 ;
(b) préparer une phase huileuse comprenant au moins une huile dans laquelle on peut dissoudre un ou plusieurs co-agents tensio-actifs ; et
(c) combiner et émulsionner simultanément ladite phase aqueuse et ladite phase huileuse, dans des conditions de cisaillement très poussé, pour produire une émulsion stable.

14. Procédé selon la revendication 13, dans lequel on dissout dans l'eau au moins un agent de structuration rhéologique tolérant aux cations, pour une utilisation dans l'étape (a), et on laisse solvater la solution résultante pendant au moins 24 heures, sous agitation douce en continu, pour éviter une introduction d'air avant l'étape (b), et/ou
on ajoute au moins un agent de pontage à la solution résultant de l'addition de l'agent émulsifiant, et/ou
on ajoute un ou plusieurs pigments, charges et agents d'allongement, et on les disperse soit individuellement, soit combinés à la solution formée par addition de l'agent émulsifiant, et/ou
on ajoute au moins un agent hydrophobe et/ou un agent de structuration rhéologique à la phase à base d'huile, et on les fait réagir dans des conditions de cisaillement poussé pendant au moins 4 heures, et/ou
on ajoute un ou plusieurs pigments, charges et agents d'allongement à la phase à base d'huile et les y disperse soit individuellement, soit combinés, après introduction d'un agent hydrophobe et/ou de structuration rhéologique.

15. Procédé pour protéger des substances cellulosiques contre une altération, comprenant l'application de l'émulsion selon l'une quelconque des revendications 1 à 12 sur lesdites substances cellulosiques.

16. Procédé selon la revendication 15, dans lequel l'application est réalisée par imprégnation sous vide, par pulvérisation ou par brossage.

17. Procédé d'application de produits toxiques sur une substance cellulosique, dans lequel, une émulsion selon l'une quelconque des revendications 1 à 12 est modifiée par l'addition de produits toxiques hydrosolubles et/ou oléosolubles, et ou de produits toxiques dispersés dans les phases.

**Patentansprüche**

1. Stabile Emulsion aus Wasser und wenigstens einem Öl, hergestellt durch gleichzeitiges Zusammenbringen und Emulgieren des Wassers und des Öls unter Bedingungen ultrahoher Scherung, worin die Emulsion eine Wasserphase enthält, die eine Säure und wenigstens ein emulgierendes Mittel umfaßt, das die Emulsion emulgiert, dadurch gekennzeichnet, daß die Wasserphase bis zu 10 Gew.-%, bezogen auf die Wasserphase, wenigstens eines Emulgators, gewählt unter kationischen und amphoteren Emulgatoren, und ausreichend Säure enthält, um in der Wasserphase einen pH-Wert innerhalb des Bereichs von 2 bis 6 einzustellen.

2. Emulsion nach Anspruch 1, worin die Wasserphase einen stark sauren, an Metallkationen reichen, polaren Komplex enthält, der auch ein oxidierendes Mittel ist.

3. Emulsion nach Anspruch 1 oder Anspruch 2, worin das wenigstens eine Öl gewählt ist unter Kreosot, Pflanzenöl, Erdölen und Erdölfraktionen.

4. Emulsion nach Anspruch 3, worin der Kreosot Hochtemperaturkreosot ist.

5. Emulsion nach irgendeinem der Ansprüche 1 bis 4, worin der wenigstens eine Emulgator gewählt ist unter einem oder mehreren quarternären Alkylammoniumchloriden, Verbindungen auf Imidazolin-Basis, N-Alkylaminopropionsäure und ethoxilierten Aminen.

6. Emulsion nach Anspruch 5, worin das ethoxilierte Amin Diamine des folgenden Typs umfaßt:

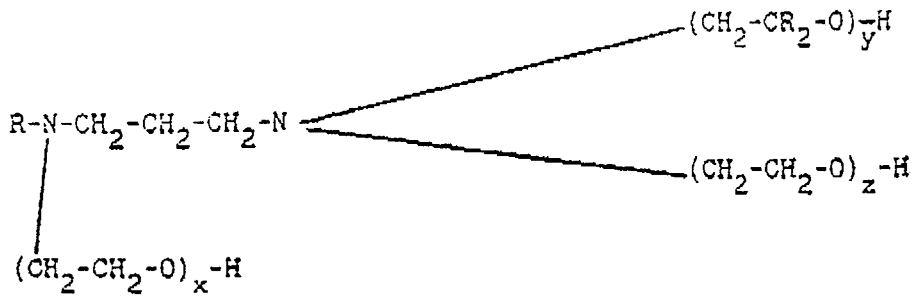

worin die Gesamtzahl x, y und z der Substituenten zwischen 3 und 100 liegt, und worin R ein Alkylderivat einer Fettsäure mit einer Kettenlänge von $C_8$ bis $C_{20}$ und/oder von Fettaminen des Typs $R-[NH-(CH_2)_3]_n-NH_2$ ist, worin n = 0 bis 5 ist und R ein Alkylderivat einer Fettsäure ist.

7. Emulsion gemäß Anspruch 6, worin die Gesamtzahl x, y und z der Substituenten zwischen 3 und 43 und vorzugsweise zwischen 3 und 12 liegt.

8. Emulsion nach irgendeinem der Ansprüche 1 bis 7, welche außerdem einen oder mehrere Zusätze enthält, die unter wenigstens einem aller nachfolgend genannten Zusätze ausgewählt sind: kationentolerante rheologiestrukturierende Mittel, Wachse, Farbstoffe, Pigmente, mikronisierte Pigmente, Füllstoffe, Streckmittel, Verbrückungsmittel, polare chemische und/oder biologisch aktive Bestandteile und hydrophobe und/oder strukturierende Mittel, worin die hydrophoben und/oder strukturierenden Mittel entweder innerhalb der Ölphase oder der wäßrigen Phase eingeführt, vermischt und umgesetzt werden, korrosionsinhibierende chemische Substanzen und flammenhemmende chemische Substanzen.

9. Emulsion nach Anspruch 8, worin das rheologiestrukturierende Mittel gewählt ist unter wasserlöslichen Polymeren von Ethylenoxid, Xanthangummen, Quelltonen, Carboxyvinylpolymeren und gerauchtem Siliciumdioxid und/oder das Pigment Titandioxid und/oder eines der Eisenoxide ist, und/oder das Verbrückungsmittel ein Glykol ist, und/oder das hydrophobe und/oder strukturierende Mittel ein Diamindioleat ist.

10. Emulsion nach Anspruch 8 oder Anspruch 9, worin das Pigment mit einem oder mehreren kationischen oder amphoteren Tensid(en) vorbeschichtet und aktiviert ist.

11. Emulsion nach Anspruch 8, worin das mikronisierte Pigment in einem amphoteren, nichtionischen oder kationischen Medium in einer Konzentration von bis zu 75 Gew.-% des vordispergierten Mediums vordispergiert ist.

12. Stabile Emulsion nach Anspruch 1, umfassend 5 bis 95 % Wasser und 5 bis 95 % wenigstens eines Öls, hergestellt durch gleichzeitiges Zusammenbringen und Emulgieren des Wassers und des Öls unter Bedingungen ultrahoher Scherung, worin die Wasserphase bis zu 25 % eines stark sauren, an Metallkationen reichen, polaren Komplexes umfaßt, der auch ein oxidierendes Mittel ist, wobei die Emulsion außerdem bis zu 2,5 % eines rheologiestrukturierenden Mittels, bis zu 30 % eines Verbrükkungsmittels und bis zu 50 % eines Pigments umfaßt, worin alle Prozentangaben auf das Gesamtgewicht der Emulsion bezogene Gewichtsprozent-Angaben sind.

13. Verfahren zur Herstellung einer stabilen Emulsion aus Wasser und wenigstens einem Öl, wie sie in irgendeinem der Ansprüche 1 bis 12 beansprucht wird, welches folgende Schritte umfaßt:
(a) Herstellen der wäßrigen Phase durch Eingeben und Lösen wenigstens eines emulgierenden

Mittels in Wasser zusammen mit einer ausreichenden Menge Säure, um der Wasserphase einen pH-Wert im Bereich von 2 bis 6 zu geben;

(b) Herstellen einer Ölphase, die wenistens ein Öl umfaßt, in dem ein oder mehrere Co-Tensid(e) gelöst sein können; und

(c) gleichzeitiges Zusammenbringen und Emulgieren der wäßrigen Phase und der Ölphase unter Bedingungen ultrahoher Scherung unter Herstellung einer stabilen Emulsion.

**14.** Verfahren nach Anspruch 13, worin wenigstens ein kationentolerantes rheologiestrukturierendes Mittel im Wasser, das in Schritt (a) verwendet werden soll, gelöst wird, und daß man die resultierende Lösung wenigstens 24 Stunden unter kontinuierlichem langsamem Rühren unter Vermeidung einer Luftsättigung vor Schritt (a) solvatisieren läßt, und/oder wenigstens ein Verbrückungsmittel der Lösung zugesetzt wird, die aus dem Zusatz des emulgierenden Mittels resultiert, und/oder ein oder mehrere Pigment(e), Füllstoff(e) und Streckmittel entweder allein oder in Kombination der Lösung zugesetzt oder in dieser dispergiert werden, die durch den Zusatz des emulgierenden Mittels gebildet wurde, und/oder wenigstens ein hydrophobes und/oder rheologiestrukturierendes Mittel der Phase auf Ölbasis zugesetzt und damit unter hoher Scherung wenigstens 4 Stunden lang umgesetzt wird, und/oder ein oder mehrere Pigment(e), Füllstoff(e) und Streckmittel der Phase auf Ölbasis entweder allein oder in Kombination nach dem Zusatz eines hydrophoben und/oder rheologiestrukturierenden Mittels zugesetzt und darin dispergiert werden.

**15.** Verfahren zur Konservierung Cellulose enthaltender Stoffe gegen Verfall, welches das Aufbringen der Emulsion gemäß irgendeinem der Ansprüche 1 bis 12 auf die Cellulose enthaltenden Substanzen umfaßt.

**16.** Verfahren nach Anspruch 15, worin die Aufbringung durch Vakuumdruckimprägnierung, Sprühen oder Aufbürsten erfolgt.

**17.** Verfahren zur Aufbringung von Giftstoffen auf ein Cellulose enthaltende Substanz, worin eine Emulsion, wie sie in irgendeinem der Ansprüche 1 bis 12 definiert ist, durch Zusatz von wasser- und/oder öllöslichen Giftstoffen und/oder phasendispergierten unlöslichen Giftstoffen modifiziert ist.

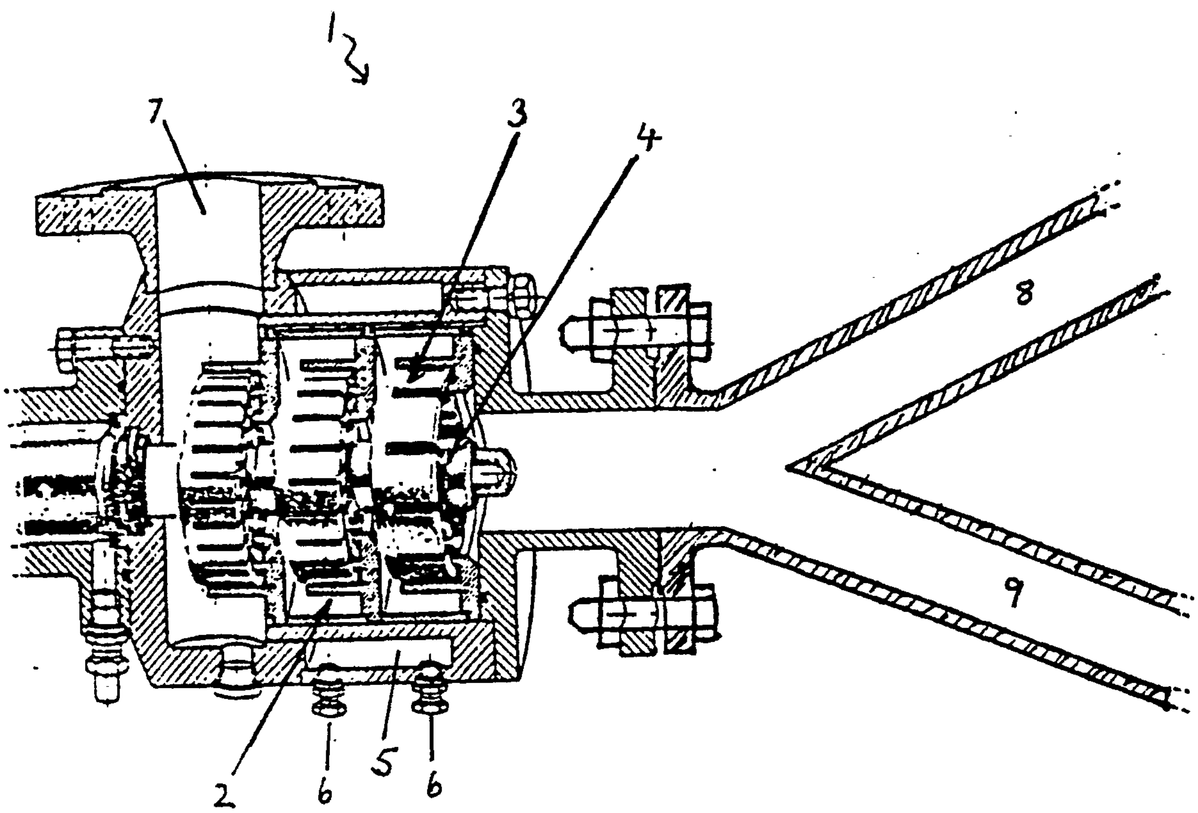


FIGURE 1

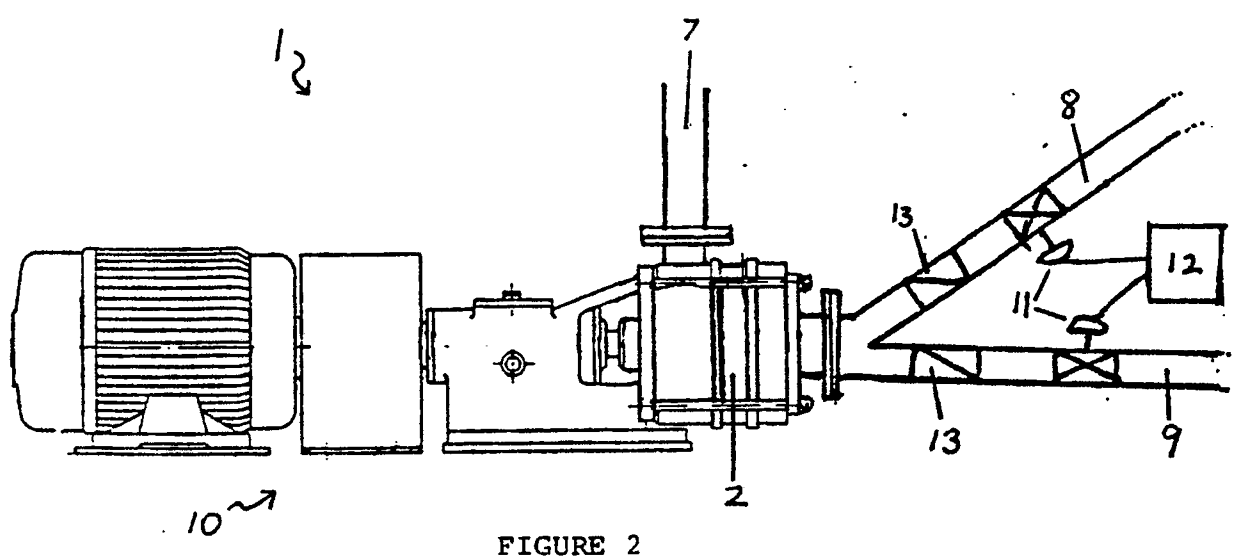


FIGURE 2